Europäisches Patentamt

European Patent Office

Office européen des brevets

(19)

(11) Veröffentlichungsnummer: 0 259 565
A2

# (12) EUROPÄISCHE PATENTANMELDUNG

(21) Anmeldenummer: 87109959.4

(22) Anmeldetag: 10.07.87

(51) Int. Cl.4: **F16D 65/16** , F16D 65/56 ,
F16D 55/224

(30) Priorität: 12.09.86 DE 3631036

(43) Veröffentlichungstag der Anmeldung:
16.03.88 Patentblatt 88/11

(84) Benannte Vertragsstaaten:
DE FR GB IT SE

(71) Anmelder: ALFRED TEVES GMBH
Guerickestrasse 7
D-6000 Frankfurt/Main 90(DE)

(72) Erfinder: Czich, Erhard
Goethestrasse 8
D-6201 Bremthal-Eppstein(DE)
Erfinder: Wagner, Jürgen
Danziger Strasse 1
D-6370 Oberursel-Weisskirchen(DE)
Erfinder: Endler, Wolfgang
Vorderwart 11
D-6238 Hofheim(DE)

(74) Vertreter: Grau, Ulf
c/o ALFRED TEVES GMBH Guerickestrassem
7
D-6000 Frankfurt (M) 90(DE)

(54) Betätigungsvorrichtung für eine Scheibenbremse, insbesondere für Kraftfahrzeuge.

(57) Eine Betätigungsvorrichtung für eine Scheibenbremse, insbesondere für Kraftfahrzeuge, weist ein
drehbar gelagertes Betätigungsglied (l2), und eine
Einrichtung zur Umsetzung einer Drehbewegung in
eine Axialbewegung (l5) (Umsetzeinrichtung) auf,
wobei ein axial bewegliches Teil dieser Einrichtung
mittelbar oder unmittelbar gegen ein Bremsbetätigungsglied wirkt, um dieses axial mit einer
Betätigungskraft zu beaufschlagen, und wobei ein
Teil der Umsetzeinrichtung mittels eines Halteelementes (9) drehfest und axial verschiebbar gehalten ist.
Um einen verbesserten Wirkungsgrad zu erzielen ist
vorgesehen, daß das Halteelement (9,l00,l20) ein
drehbar gelagertes Teil (72,l03,l24) aufweist, das an
einem gehäusefest angeordneten Element
(70,l0l,l2l) gelagert ist, und das zwischen dem drehbaren Teil und dem gehäusefesten Element reibungsvermindernde Mittel (l08,l23) vorgesehen sind.

Fig. 1

EP 0 259 565 A2

## Betätigungsvorrichtung für eine Scheibenbremse, insbesondere für Kraftfahrzeuge

Die Erfindung - - betrifft eine Betätigungsvorrichtung für eine Scheibenbremse, insbesondere für Kraftfahrzeuge, gemäß dem Oberbegriff des Patentanspruches I.

Eine derartige Betätigungseinrichtung ist aus der DE 34 45 564 AI bekannt. Bei dieser Betätigungsvorrichtung ist ein Betätigungsglied in Form eines drehbar gelagerten Betätigungshebels vorgesehen, der auf eine Rollenrampeneinrichtung wirkt, welche die Drehbewegung des Betätigungshebels in eine Axialbewegung umsetzt. Hierzu ist ein Element der Rollenrampe mit dem drehbaren Betätigungshebel verbunden, wohingegen das andere Element der Rollenrampe mittels eines gehäusefesten Stiftes drehfest jedoch axial verschiebbar gehalten ist. Das drehfest gehaltene Teil wirkt auf die Nachstellmutter eines längenverstellbaren Schubgliedes.

Die bekannte Betätigungsvorrichtung arbeitet weitestgehend zufriedenstellend. Für manche Fälle ist es jedoch wünschenswert, den Wirkungsgrad der Betätigungseinrichtung weiter zu verbessern.

Der Erfindung liegt daher die Aufgabe zugrunde, eine Betätigungsvorrichtung der im Oberbegriff des Patentanspruches I angegebenen Art zu schaffen, die einen verbesserten Wirkungsgrad aufweist.

Diese Aufgabe wird erfindungsgemäß durch die den Patentanspruch I kennzeichnenden Merkmale gelöst.

Es hat sich überraschend herausgestellt, daß das Halteelement zur drehfesten und axial verschiebbaren Halterung des Rollenrampenelementes äußerst hohe Abstützkräfte (etwa 20.000 N) aufnehmen muß, wodurch bei der bekannten Lösung der Wirkungsgrad der Betätigungseinrichtung beeinträchtigt wird. Mit der erfindungsgemäßen Lösung wird auf einfache Weise die Reibkraft verringert und dadurch der Wirkungsgrad der Bremse verbessert ohne daß die Eigenschaft des Halteelementes, hohe Abstützkräfte aufzunehmen, beeinträchtigt wird.

Eine vorteilhafte Ausführungsform der Erfindung sieht vor, daß das Halteelement ein drehbar gelagertes Teil aufweist, das auf einem gehäusefest angeordneten Bolzen gelagert ist, und das zwischen dem gehäusefesten Bolzen und dem drehbaren Teil eine Gleitbeschichtung vorgesehen ist. Dadurch kann ohne zusätzliche Bauteile eine wesentliche Minderung der Reibverluste und damit Verbesserung des Wirkungsgrades herbeigeführt werden.

Als besonders zweckmäßig hat es sich herausgestellt, wenn der gehäusefeste Bolzen zumindest im Lagebereich des drehbaren Teiles zumindest teilweise konisch ausgeführt ist. Hiermit läßt sich eine Anpassung entsprechend der auftretenden Biegespannung erreichen.

Das Haltelement ist mit Vorteil gestuft ausgeführt, wobei insbesondere zwischen dem Halteelement und der diesen aufnehmenden Gehäusebohrung eine Dichtung angeordnet ist.

Eine andere sehr vorteilhafte Ausführungsform der Erfindung sieht vor, daß das Halteelement ein drehbar gelagertes Teil aufweist, das an einem gehäusefesten Teil gelagert ist, und daß zwischen dem drehbaren Teil und dem gehäusefesten Teil ein Wälzlager angeordnet ist. Mit dieser Lösung wird zwar der bauliche Aufwand etwas vergrößert, der Wirkungsgrad wird jedoch ganz erheblich verbessert. Eine zweckmäßige Ausführungsform dieser Ausgestaltung sieht vor, daß das drehbar gelagerte Teil ein glatter Stift ist. Bei dieser Ausführungsform treten praktisch keine Kerbwirkungen auf, so daß die mechanische Festigkeit des Stiftes nicht beeinträchtigt wird. Als zweckmäßiges Lager kommt insbesondere ein Nadellager in Frage, wobei gemäß einer weiteren Ausführungsform das drehbar gelagerte Teil und das Wälzlager in einer hohlen Schraube angeordnet sind.

Ausführungsbeispiele der Erfindung sind in der Zeichnung dargestellt und im Folgenden beschrieben.

Es zeigen:

Fig. I einen Längsschnitt durch eine Betätigungseinrichtung einer Scheibenbremse;

Fig. 2 eine vergrößerte Darstellung eines Querschnittes durch eine andere Ausführungsform eines Halteelementes einer Scheibenbremse;

Fig. 3 eine vergrößerte Darstellung eines Querschnittes einer weiteren Ausführungsform des Haltelementes.

Es wird zunächst auf Fig. I Bezug genommen, die einen Längsschnitt durch einen Teil eines Scheibenbremsgehäuses I zeigt, in dem eine Betätigungseinrichtung mit Nachstellvorrichtung für einen Bremskolben 2 angeordnet ist. Der topfförmig ausgebildete Bremskolben 2 ist in einer axialen Bohrung 3 des Bremsgehäuses I axial verschiebbar angeordnet, wobei der Boden 4 des Bremskolbens 2 einem Zwischenglied 5 zugewandt ist, an dem er anliegt. Das Zwischenglied 5 seinerseits liegt an der Rückenplatte 6 eines Bremsbelages 7 an, so daß letzterer bei einer axialen Verschiebung des Bremskolbens 2 über das Zwischenglied 5 gleichfalls axial verschoben wird, um gegen eine (nicht dargestellte) Bremsscheibe gedrückt zu werden. Beim Anlegen des Bremsbelages 7 an die Bremsscheibe entsteht eine Reaktionskraft, die das Bremsgehäuse I entgegengesetzt verschiebt, wodurch ein (nicht dargestellter) Schenkel des Bremsgehäuses I einen auf der anderen Seite der Bremsscheibe angeordneten (gleichfalls nicht dargestellten) Bremsbelag gegen die andere Seite der Bremsscheibe drückt. Um die Bohrung 3 vor Verschmutzungen zu schützen, ist eine Schutzkappe 8 vorgesehen, die in Nuten des Bremsgehäuses I und des Bremskolbens 2 befestigt ist.

Zur Betätigung der Bremse ist in einer endseitigen Bohrung II des Bremsgehäuses I ein Betätigungsglied I2 drehbar gelagert. Das Betätigungsglied I2 weist einen zylindrischen Lagerabschnitt I3 und einen Betätigungshebel I4 auf. Der zylindrische Lagerabschnitt I3 erstreckt sich durch die Bohrung II in die Bohrung 3 hinein, wo er mit einer Stirnseite an einer Einrichtung I5 anliegt, die dazu dient, die Drehbewegung des Betätigungsgliedes I2 in eine axiale Bewegung umzusetzen. Diese Einrichtung I5 ist hier eine Rollenrampe, die zwei Rampenelemente I6,I7 aufweist, zwischen denen Rollen I8 angeordnet sind. Das dem Betätigungsglied I2 zugewandte Rampenelement I6 ist mit diesem mittels Schrauben I9 drehfest verbunden, so daß eine Drehbewegung des Betätigungsgliedes I2 unmittelbar zu einer Drehung des Rampenelementes I6 führt. Das andere Rampenelement I7 ist drehfest angeordnet, was dadurch bewirkt wird, daß ein im Gehäuse I drehfest fixiertes Exzenterelement 9 durch einen im Kolben 5 vorgesehenen Längsschnitt hindurch in eine entsprechende Ausnehmung 20 des Rampenelementes I7 eingreift. Die Ausnehmung 20 ist axial ausgerichtet, so daß das Rampenelement I7 zwar eine axiale Bewegung jedoch keine Drehbewegung ausführen kann. Zwischen dem Boden 2I der Bohrung 3 und dem Rampenelement I6 ist ein Rollenlager 22 auf einer Scheibe angeordnet.

Die Rollenrampe I5 wirkt mit ihrem Rampenelement I7 gegen ein längenveränderbares Schubglied 23, das von einer Nachstellmutter 24 und einer Nachstellspindel 25 gebildet wird, welche über ein selbsthemmendes Gewinde 26 miteinander in Eingriff stehen. Die Nachstellmutter 24 weist einen sich axial erstreckenden Schaftabschnitt 27 und einen sich radial erstreckenden Flanschabschnitt 28 auf. Auch die Nachstellspindel 25 besteht aus einem axialen Schaftabschnitt 29 und einem radialen Flanschabschnitt 30. Die Flanschabschnitte 28,30 der Nachstellmutter und der Nachstellspindel sind dem Boden 4 des Bremskolbens 2 zugewandt. Der Flanschabschnitt 30 der Nachstellspindel 25 liegt dabei mit seiner Stirnseite 3I am Boden 4 des Bremskolbens 2 an und ist über eine Ausreißsicherung 32 mit dem Bremskolben verbunden. Die Schaftabschnitte 27,29 der Nachstellmutter 24 und der Nachstellspindel 25 erstrecken sich durch zentrale Bohrungen 33,34, die in den Rampenelementen I6,I7 vorgesehen sind, zum Betätigungsglied I2 hin, wobei ihre Enden in einer zylindrischen Ausnehmung 35 des Betätigungsgliedes I2 angeordnet sind. Am Außenumfang des Schaftabschnittes 27 der Nachstellmutter 24 ist eine Ringnut 36 vorgesehen, in der ein Ring 37 sitzt. An diesem Ring stützt sich eine Druckfeder 38 ab, deren anderes Ende an einer Schulter 39 des Rampenelementes I6 anliegt. Dadurch wird die Nachstellmutter 24 mit einer Stirnfläche ihres Flanschabschnittes 28 gegen eine Stirnfläche des Rampenelementes I7 gedrückt und bleibt dort in Anlage.

In der Ausnehmung 35 des Betätigungsgliedes I2 sind auch Kupplungen angeordnet. In der hohlen Nachstellspindel 25 ist eine Zahnwelle 40 angeordnet, die einen Verzahnungsabschnitt 4I aufweist, der im wesentlichen in der hohlen Nachstellspindel 25 angeordnet ist, um die Zahnwelle 40 axial verschiebbar aber drehfest mit der Nachstellspindel 25 zu verbinden, und eine Lagerabschnitt 42, der aus der hohlen Nachstellspindel 25 in Richtung zum Betätigungsglied I2 hin aus dieser hervorragt. Auf dem Lagerabschnitt 42 der Zahnwelle 40 ist eine Hülse 43 drehbar angeordnet. Die Hülse 43 weist einen sich axial erstreckenden zylindrischen Abschnitt 44 und einen sich radial erstreckenden Flanschabschnitt 45 auf. Im Flanschabschnitt 45 der Hülse 43 ist eine Ausnehmung 46 vorgesehen, die sich über einen Teil des Umfanges des Flanschabschnittes 45 erstreckt und in die ein Stift 47 eingreift, der im Betätigungsglied I2 befestigt ist.

Zur axialen Befestigung der Hülse 43 ist ein Ring 50 vor gesehen, der in einer Ringnut 5I des Betätigungselementes 42 sitzt. Auf dem zylindrischen Abschnitt 44 der Hülse 43 ist eine einsinnig wirkende Kupplung 52 vorgesehen, die hier von einem Nadelrollenfreilauf gebildet ist. Der äußere Kupplungsring 53 der Kupplung weist einen Konus 54 auf, der mit einem Konus 55 zusammenwirkt, der an einem Kupplungselement 56 ausgebildet ist, um mit diesem eine Reibkupplung 57 zu bilden. Das Kupplungselement 56 ist über eine Verzahnung 58 drehfest aber axial verschiebbar auf der Zahnwelle 40 angeordnet.

In axialer Richtung ist das Kupplungselement 56 von einem Käfig 59 gehalten. Zwischen einem Flanschabschnitt 60 des Käfigs 59 und dem Kupplungselement 56 ist eine Tellerfeder 62 vorgesehen, die das Kupplungselement 56 gegen den Kupplungsring 53 drückt, um einen Reibeingriff zwischen dem Konus 54 und dem Konus 55 zu bewirken. Am Ende des Lagerabschnittes 42 der Zahnwelle 40 ist eine Ausnehmung 65 vorgesehen, die mit einem Innensechskant versehen ist, um ein entsprechendes Werkzeug einzusetzen, um die Zahnwelle 40 zu verdrehen.

Nachfolgend ist die Arbeitsweise der Betätigungseinrichtung und der Nachstellvorrichtung beschrieben:

Bei einer Drehung des Betätigungsgliedes l2 und des damit fest verbundenen Rampenelementes l6 werden die beiden Rampenelemente l6 und l7 relativ zueinander verdreht, da das Rampenelement l7 vom Exzenterelement 9 drehfest gehalten wird. Infolgedessen erhält das drehfeste Rampenelement l7 eine axiale Bewegung, die auf die mittels eines Stiftes 66 gleichfalls drehfest gehaltene Nachstellmutter 24 über tragen wird. Diese überträgt die axiale Bewegung über das selbsthemmende Gewinde 26 auf die Nachstellspindel 25, welche über den Bremskolben 2 und das Zwischenglied 5 gegen den Bremsbelag 7 wirkt, um diesen gegen die (nicht dargestellte) Bremsscheibe zu drücken. Diese Bewegung erfolgt entgegen der Kraft der Druckfeder 38. Wird nun infolge einer Abnutzung der Bremsbeläge vom Betätigungsglied l2 ein bestimmter Drehwinkel überschritten, so kommt der Stift 47 zur Anlage an einer seitlichen Begrenzung der Ausnehmung 46, so daß die Hülse 43 mitgenommen wird. Über den gesperrten Freilauf 52 und die Reibkupplung 57 wird die Verdrehbewegung auf die Zahnwelle 40 übertragen, welche die Nachstellspindel 25 um den entsprechenden Winkel verdreht. Im Aufbau der Zuspannkraft entsteht an den Flanken des Nachstellgewindes 26 ein Reibmoment. Bei einer bestimmten Zuspannkraft, die beispielsweise 3.000 bis 5.000 N betragen kann, übersteigt dieses Reibmoment das der Reibkupplung 57, welche dann durchrutscht. Damit wird keine weitere Bewegung aus dem Dehnungsweg mehr übertragen. Nach der Betätigung der Bremse wird das Betätigungsglied l2 in umgekehrter Richtung verdreht Diese Drehbewegung bleibt auf die Nachstellvorrichtung wirkungslos, da die einsinnig wirkende Kupplung 52 in dieser Richtung freiläuft. Um bei einem Belagwechsel die mechanische Betätigung wieder in die Ausgangsstellung zu bringen, braucht nach Entfernen der die Öffnung 67 im Betätigungsglied l2 verschließenden Verschlußschraube 68 lediglich ein Sechskantschlüssel in die Ausnehmung 65 am Ende der Zahnwelle 40 eingesetzt zu werden, um diese bis zum Anschlag zurückzudrehen.

Das Exzenterelement 9 hat bei dieser Ausführung eine Dop pelfunktion insofern, als es einerseits das Rampenelement l7 drehfest hält und andererseits eine Verstellmöglichkeit bietet. Das Exzenterelement weist hierzu einen zylindrischen Grundkörper 70 auf, an dem ein zylindrischer Fortsatz 7l exzentrisch angebracht ist. Die Exzentrizität ist durch den Abstand e der Symmetrieachsen des Grundkör pers 70 und des Ansatzes 7l gegeben. Auf dem Ansatz ist ein Ring 72 gelagert und mittels eines Sicherungsringes 73 gehalten. Zwischen dem zylindrischen Fortsatz und dem darauf gelagerten Ring 72 ist eine Gleitbeschichtung z.B. aus Molydag (06396) vorgesehen, die entweder am Fortsatz oder an der Innenfläche des Ringes 72 angebracht sein kann. Am Grundkörper 70 ist ein zylindrischer Abschnitt 74 mit vergrößertem Durchmesser vorgesehen, der am Umfang eine Ringnut 75 aufweist, in die eine Dichtung 76 eingesetzt ist. Das Exzenterelement ist in eine im Scheibenbremsgehäuse l vorgesehene Stufenbohrung 77 eingesetzt und mittels der Dichtung 76 gegenüber der Bohrungswandung abgedichtet. Im zylindrischen Abschnitt 74 ist eine im Querschnitt sechseckige Ausnehmung 78 ausgebildet, in die ein Werkzeug eingesetzt werden kann, mit dem das Exzenterelement verdrehbar ist. Um das Exzenterelement 9 in der Stufenbohrung 77 drehfest zu halten ist eine Feststellschraube 79 vorgesehen, die in einen Gewindeabschnitt 80 der Stufenbohrung eingeschraubt ist und die mit ihrer Stirnfläche gegen die Oberseite des zylindrischen Abschnittes 74 drückt, so daß das Exzenterelement 9 mittels Reibschluß festgehalten ist. Nach dem Lockern der Feststellschraube 79 kann das Exzenterelement 9 verdreht werden. Hierdurch wird die Grundstellung des Rampenelementes l7 entsprechend verändert und somit gleichzeitig die Lage des Betätigungsgliedes l2. Nach dem Einstellen des Exzen ters wird die Feststellschraube wieder festgezogen, um das bei einer Betätigung von dem Rampenelement l7 übertragene Abstützelement in der eingestellten Lage aufnehmen zu können.

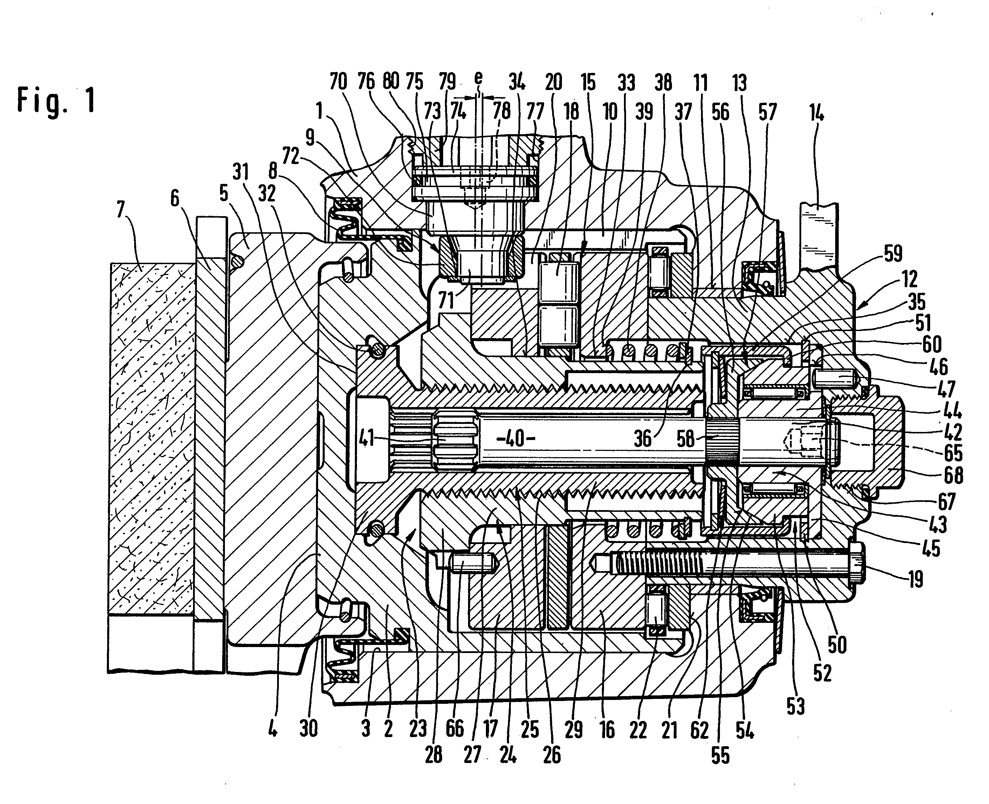

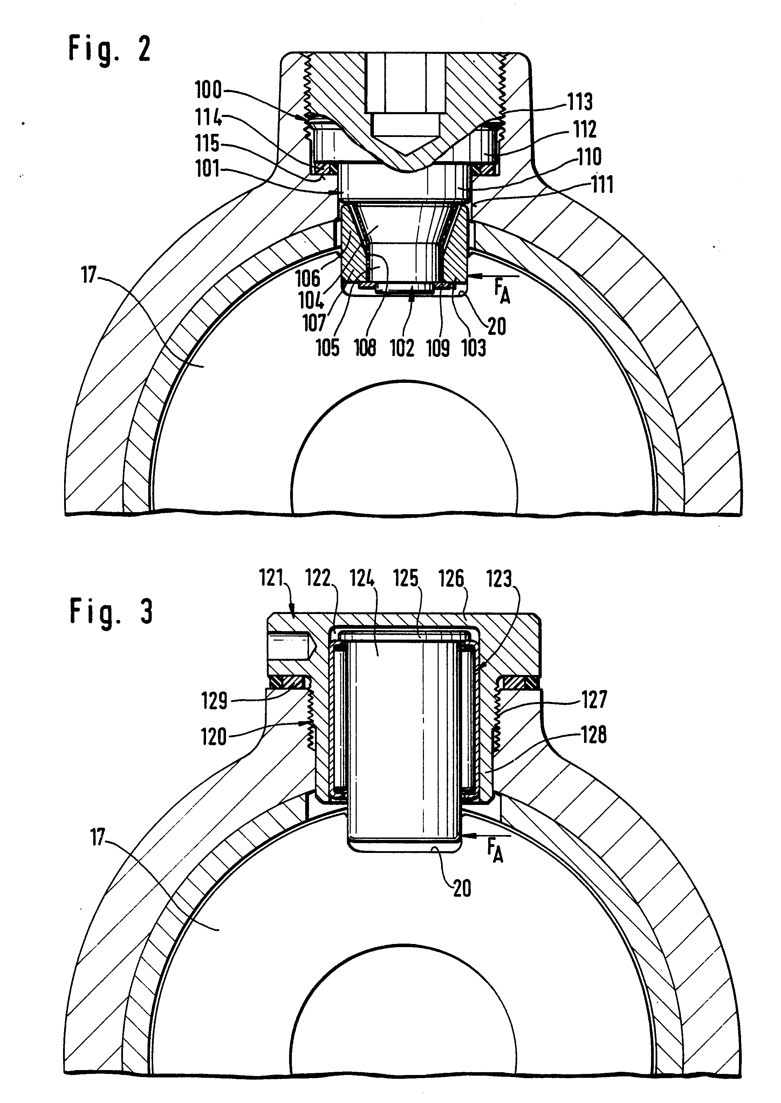

Es wird nun auf Fig. 2 Bezug genommen, die eine andere Ausführungsform eines Halteelementes l00 zeigt, bei dem die Einstellfunktion fehlt. Das Halteelement weist einen gestuften Grundkörper l0l auf, an dem ein Fortsatz l02 angebracht ist, der eine Rolle l03 trägt. Der Fortsatz l02 weist einen an den Grundkörper l0l angrenzenden konischen Abschnitt l04 auf und einen daran anschließenden zylindrischen Abschnitt l05. Die Rolle l03 weist entsprechend einen konischen Abschnitt l06 und einen zylindrischen Abschnitt l07 auf. Zwischen der Rolle l03 und dem Fortsatz l02 ist eine Gleitbeschichtung l08 vorgesehen, die hier auf dem Fortsatz l02 aufgebracht ist. Zur Halterung der Rolle l03 ist am Fortsatz l02 ein Ring l09 befestigt. Der Grundkörper l0l weist einen Abschnitt ll0 verringerten Durchmessers auf, dessen Durchmesser dem Durchmesser eines Gehäusebohrungsabschnittes lll angepaßt ist. Über diesen Abschnitt ll0 wird der wesentliche Teil der Umfangskräfte übertragen. Angrenzend an den Abschnitt ll0 folgt ein Abschnitt ll2 vergrößerten Durchmessers an den ein

Gewindeabschnitt II3 angrenzt, über den das Halteelement I00 in ein entsprechendes Gewinde der gestuften Gehäusebohrung eingeschraubt ist. An der Stufe zwischen dem Abschnitt II0 und dem Abschnitt II2 ist eine Dichtung II4 vorgesehen, die auf einer Stufe II5 der Gehäusebohrung aufliegt. Bei der dargestellten Ausführungsform ist zwischen dem konischen Abschnitt II0 des Fortsatzes I02 und dem entsprechenden Abschnitt der Rolle I03 ein Spiel vorgesehen, so daß die Rolle I03 nur mit dem zylindrischen Abschnitt I05 am Fortsatz anliegt. Die Gleitbeschichtung kann infolgedessen auch nur in diesem Bereich vorgesehen sein. Die Ausnehmung 20 des Rampenelementes I7 ist in ihrer Breite dem Durchmesser der Rolle I03 angepaßt. Die in Umfangsrichtung wirksamen Kräfte sind in Fig. 2 mit dem Pfeil $F_A$ angedeutet.

Bei der in Fig. 3 dargestellten Ausführungsform eines Halteelementes I20 ist eine Schraube I2I vorgesehen, die einen zentralen Hohlraum I22 aufweist. In diesem Hohlraum ist ein Nadellager I23 angeordnet, welches einen zylindrischen Stift I24 trägt. Der Stift weist an seinem oberen Ende einen Kopf I25 auf, der sich am Käfig des Nadellagers I23 abstützt, so daß der Stift I24 axial gegen eine Verschiebung gesichert ist. Der untere Abschnitt des Stiftes I24 springt über das Nadellager I23 vor und greift in die Ausnehmung 20 des Rampenelementes I7 ein. Die Schraube I2I weist einen Kopf I26, einen Gewindeabschnitt I27 und einen zylindrischen Abschnitt I28 auf, der einem entsprechenden Gehäusebohrungsabschnitt angepaßt ist. Zwischen dem Kopf I26 und einer am Gehäuse ausgebildeten Fläche ist eine Dichtung I29 angeordnet.

Auflistung der Einzelteile

I Scheibenbremsgehäuse
2 Bremskolben
3 Bohrung
4 Boden
5 Zwischenglied
6 Rückenplatte
7 Bremsbelag
8 Schutzkappe
9 Exzenterelement
I0 Ausnehmung
II Bohrung
I2 Betätigungsglied
I3 Lagerabschnitt
I4 Betätigungshebel
I5 Rollemrampe
I6 Rampenelement
I7 Rampenelement
I8 Rolle
I9 Schraube
20 Ausnehmung

2I Boden
22 Rollenlager
23 Schubglied
24 Nachstellmutter
25 Nachstellspindel
26 selbsthemmendes Gewinde
27 Schaftabschnitt
28 Flanschabschnitt
29 Schaftabschnitt
30 Flanschabschnitt
3I Stirnseite
32 Ausreißsicherung
33 Bohrung
34 Bohrung
35 Ausnehmung
36 Ringnut
37 Ring
38 Druckfeder
39 Schulter
40 Zahnwelle
4I Verzahnungsabschnitt
42 Lagerabschnitt
43 Hülse
44 zylindrischer Abschnitt
45 Flanschabschnitt
46 Ausnehmung
47 Stift
48 -
49 -
50 Ring
5I Ringnut
52 Kupplung
53 Kupplungsring
54 Konus
55 Konus
56 Kupplungselement
57 Reibkupplung
58 Verzahnung
59 Käfig
60 Flanschabschnitt
6I -
62 Tellerfeder
63 -
64 -
65 Ausnehmung
66 Stift
67 Öffnung
68 Verschlußschraube
69 -
70 Grundkörper
7I Ansatz
72 Ring
73 Sicherungsring
74 zylindrischer Abschnitt
75 Ringnut
76 Dichtung
77 Stufenbohrung
78 Ausnehmung

79 Feststellschraube
80 Gewindeabschnitt

91 Nachstellmutter
92 Stift
93 Betätigungselement
94 Hülsenteil
95 zylindrischer Abschnitt
96 Druckfeder
97 Rampenelement
98 Kugellager
99 -
100 Halteelement
101 Grundkörper
102 Fortsatz
103 Rolle
104 konischer Abschnitt
105 zylindrischer Abschnitt
106 konischer Abschnitt
107 zylindrischer Abschnitt
108 Gleitbeschichtung
109 Ring
110 Abschnitt
111 Gehäusebohrungsabschnitt
112 Abschnitt
113 Gewindeabschnitt
114 Dichtung
115 Stufe

120 Halteelement
121 Schraube
122 Hohlraum
123 Nadellager
124 Stift
125 Kopf
126 Kopf
127 Gewindeabschnitt
128 zylindrischer Abschnitt
129 Dichtung

## Ansprüche

1. Betätigungsvorrichtung für eine Scheibenbremse, insbesondere für Kraftfahrzeuge, mit einem drehbar gelagerten Betätigungsglied, mit einer Einrichtung zur Umsetzung einer Drehbewegung in eine Axialbewegung (Umsetzeinrichtung), wobei ein axial bewegliches Teil dieser Einrichtung mittelbar oder unmittelbar gegen ein Bremsbetätigungsglied wirkt, um dieses axial mit einer Betätigungskraft zu beaufschlagen, und wobei ein Teil der Umsetzeinrichtung mittels eines Halteelementes drehfest und axial verschiebbar gehalten ist, dadurch **gekennzeichnet,** daß das Halteelement (9,100,120) ein drehbar gelagertes Teil (72,103,124) aufweist, das an einem gehäusefest angeordneten Element (70,101,121) gelagert ist, und das zwischen dem drehbaren Teil und dem gehäusefesten Element reibungsvermindernde Mittel (108,123) vorgesehen sind.

2. Betätigungsvorrichtung nach Anspruch 1, dadurch **gekennzeichnet,** daß das gehäusefest angeordnete Element einen Bolzen aufweist, und daß zwischen dem gehäusefesten Bolzen und dem drehbaren Teil (103) eine Gleitbeschichtung (108) vorgesehen ist.

3. Betätigungsvorrichtung nach Anspruch 2, dadurch **gekennzeichnet,** daß der gehäusefeste Bolzen zumindest im Lagerbereich des drehbaren Teiles (103) zumindest teilweise konisch ausgeführt ist.

4. Betätigungsvorrichtung nach einem der vorhergehenden Ansprüche, dadurch **gekennzeichnet,** daß das Halteelement (100) gestuft ausgeführt ist.

5. Betätigungsvorrichtung nach einem der vorhergehenden Ansprüche, dadurch **gekennzeichnet,** daß zwischen dem Halteelement (100) und der diesen aufnehmenden Gehäusebohrung eine Dichtung (114) angeordnet ist.

6. Betätigungsvorrichtung nach Anspruch 1, dadurch **gekennzeichnet,** daß das Halteelement (120) ein drehbar gelagertes Teil aufweist, das an einem gehäusefesten Teil (121) gelagert ist, und daß zwischen dem drehbaren Teil (124) und dem gehäusefesten Teil (121) ein Wälzlager (123) angeordnet ist.

7. Betätigungsvorrichtung nach Anspruch 6, dadurch **gekennzeichnet,** daß das Wälzlager (123) ein Nadellager ist.

8. Betätigungsvorrichtung nach Anspruch 6 oder 7, dadurch **gekennzeichnet,** daß das drehbar gelagerte Teil ein im wesentlichen glatter Stift (124) ist.

9. Betätigungsvorrichtung nach einem der Ansprüche 6 bis 8, dadurch **gekennzeichnet,** daß das drehbare Teil (124) und das Wälzlager (123) im Hohlraum (122) einer Schraube (121) angeordnet ist.

10. Betätigungsvorrichtung nach einem der vorhergehenden Ansprüche, dadurch **gekennzeichnet,** daß das Halteelement (9) exzentrisch ausgeführt ist.

# Fig. 1

0 259 565

Fig. 2

Fig. 3